# FASCICULE DE BREVET EUROPEEN

(11) **EP 0 724 107 B1**
(45) Date de publication et mention de la délivrance du brevet: **17.05.2000**
(21) Numéro de dépôt: 96400170.5
(22) Date de dépôt: 25.01.1996
(51) Int. Cl.: F16L 33/08

(54) **Collier de serrage à réglage instantané**
Klemmschelle mit schnellverstellungsmöglichkeit.
Clamping collar having quick acting adjustment means.

(30) Priorité: 27.01.1995 FR 9500979
(43) Date de publication de la demande: 31.07.1996
(73) Titulaire: EQUIPEMENTS SPECIAUX POUR L'AVIATION ESPA, 77257 Brie-Comte-Robert (FR)
(72) Inventeur: Dolez, Marc, F-45160 Olivet (FR)
(74) Mandataire: Casalonga, Axel

(56) Documents cités:
- DE-A- 2 525 823
- DE-A- 3 130 112
- DE-B- 1 249 030
- ENGINEERING, MATERIALS & DESIGN, vol. 27, no. 10, Octobre 1983 LONDON (UK), page 11 'band fastener strangles vibration'
- MACHINE DESIGN, vol. 56, no. 26, Novembre 1984 CLEVELAND, OHIO, (USA), 'types of worm drive clamps'

## Description

La présente invention se rapporte à un collier de serrage comprenant une bande métallique formant une boucle ouverte destinée à entourer l'objet à serrer, une cage reliée à une première partie d'extrémité de ladite bande, un écrou relié par un axe d'articulation parallèle à l'axe de la boucle formée par la bande à un support susceptible de coopérer avec la seconde partie d'extrémité de la bande, une vis de serrage engagée dans ledit écrou et une butée montée mobile sur la vis, entre la tête de cette dernière et l'écrou, pour permettre l'appui de la tête de la vis contre la cage en vue du serrage de la bande.

Sur un collier de serrage connu de ce type, une première partie d'extrémité de la bande métallique traverse en forme de boucle un évidement de la cage et l'autre traverse en forme de boucle un évidement du support, les deux parties d'extrémité étant ainsi rendues solidaires de la cage et du support, respectivement. L'amplitude de réglage du collier est donc limitée à la longueur de la vis. Par contre, l'avantage de ce collier connu consiste dans le couple de serrage très élevé.

D'autres colliers de serrage connus comprennent une cage à vis tangente, solidaire d'une première partie d'extrémité de la bande métallique, cette dernière étant munie, sur toute ou partie de sa longueur, d'une rangée d'encoches susceptible de coopérer avec la vis tangente. Ces colliers présentent une grande plage de réglage, mais le couple de serrage est limité du fait de la mauvaise utilisation de la vis. Pour permettre une adaptation instantanée d'un tel collier au diamètre de la pièce à serrer, il est en outre connu de monter la vis dans une pièce de butée reliée à la cage par un axe d'articulation parallèle à l'axe de la boucle de la bande métallique de telle manière que la vis puisse, par pivotement de la pièce de butée par rapport à la cage, être écartée de la bande métallique pour permettre à la seconde partie d'extrémité de cette dernière d'être enfilée dans la cage, sous la vis, sans être en prise avec cette dernière.

La présente invention vise un collier de serrage qui combine les avantages de ces deux types de colliers connus, sans en présenter les inconvénients, c'est-à-dire qui permette un réglage instantané et de grande amplitude pour l'adaptation au diamètre de l'objet à serrer et admettre un couple de serrage très important.

Le collier de serrage objet de l'invention comprend une bande métallique formant une boucle ouverte destinée à entourer l'objet à serrer. Une cage est reliée à une première partie d'extrémité de ladite bande. Un écrou est relié par un axe d'articulation parallèle à l'axe de la boucle de la bande métallique à un support coopérant avec la seconde partie d'extrémité de la bande métallique. Une vis de serrage est engagée dans ledit écrou et une butée est montée mobile sur la vis, entre la tête de cette dernière et l'écrou, pour permettre l'appui de la tête de la vis contre la cage en vue du serrage de la bande métallique. Selon l'invention, le support sur lequel est articulé l'écrou comporte au moins une dent faisant saillie sur le support en direction de l'écrou. La bande métallique présente, au moins dans sa seconde partie d'extrémité, une rangée longitudinale de trous de telle manière que ladite seconde partie d'extrémité de la bande métallique puisse être enfilée dans le support, entre la dent de ce dernier et l'écrou, et que ladite dent du support puisse s'accrocher dans un trou de ladite rangée, pour rendre ainsi le support solidaire de ladite seconde partie d'extrémité de la bande métallique en vue du serrage du collier pour la vis.

De préférence, l'écrou comporte des moyens pour empêcher la dent du support de se déformer sous l'effort de traction exercé sur la bande lors du serrage.

Suivant un mode de réalisation préféré, l'écrou comporte au moins un côté plat perpendiculaire à l'axe de la vis et un côté adjacent ayant une partie médiane cylindrique qui est centrée sur l'axe d'articulation et présente un rayon de courbure supérieur à la distance séparant ledit côté plat de l'axe d'articulation, de façon normale audit côté plat.

Par ailleurs, l'écrou présente avantageusement des moyens empêchant la bande de se dégager de la dent du support.

Suivant un mode de réalisation préféré, l'écrou présente, sur son côté adjacent audit côté plat, de part et d'autre de ladite partie médiane cylindrique, deux parties latérales cylindriques ayant un rayon de courbure supérieur à celui de la partie médiane cylindrique.

La dent du support est avantageusement inclinée en opposition au sens de la traction exercée sur la seconde partie d'extrémité lors du serrage de la vis.

Cette dent peut avantageusement présenter une forme triangulaire ou trapézoïdale.

Les trous de la bande métallique peuvent être des trous circulaires.

De préférence, la cage et le support comportent des moyens de maintien provisoire du support sur la cage, moyens dont l'action est automatiquement annulée lors du serrage de la vis.

Par ailleurs, le support et l'écrou peuvent avantageusement comporter des moyens de maintien provisoire de l'écrou dans la position d'enfilage de la deuxième partie d'extrémité de la bande entre l'écrou et le support.

Ces moyens de maintien provisoire peuvent comprendre des saillies sur l'une des pièces et des creux sur l'autre pièce, permettant un encliquetage par effet d'élasticité de l'une au moins des deux pièces.

En se référant aux dessins schématiques annexés, on va décrire ci-après plus en détail un mode de réalisation illustratif et non limitatif d'un collier de serrage conforme à l'invention; sur les dessins :
la figure 1 est une vue latérale partielle d'un collier de serrage fermé, non serré;
la figure 2 est une coupe partielle du collier sur la figure 1, suivant l'axe de la vis de serrage;
la figure 3 est une coupe analogue à celle de la figure 2, montrant la vis et l'écrou en position d'enfilage de la seconde partie d'extrémité libre de la bande dans le support;
la figure 4 est une coupe suivant IV-IV de la figure 2; et
la figure 5 est une coupe suivant la figure 2, en fin de serrage du collier.

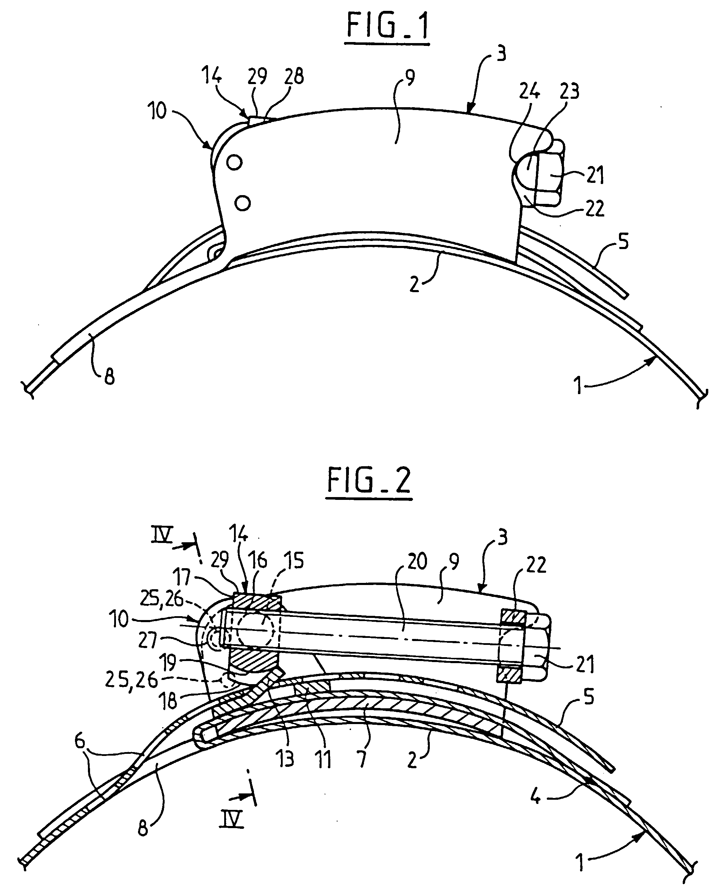

Le collier de serrage tel qu'illustré comprend une bande métallique 1 destinée à entourer sous la forme d'une boucle l'objet à serrer, non représenté, par exemple un tube, manchon, etc. Une première partie d'extrémité 2 de la bande 1 est solidaire d'une cage 3, en étant par exemple repliée sur elle-même et fixée par un point de soudure 4 (voir figure 2). La seconde partie d'extrémité ou partie d'extrémité libre 5 de la bande 1 est munie d'une rangée longitudinale de trous 6, par exemple de forme circulaire.

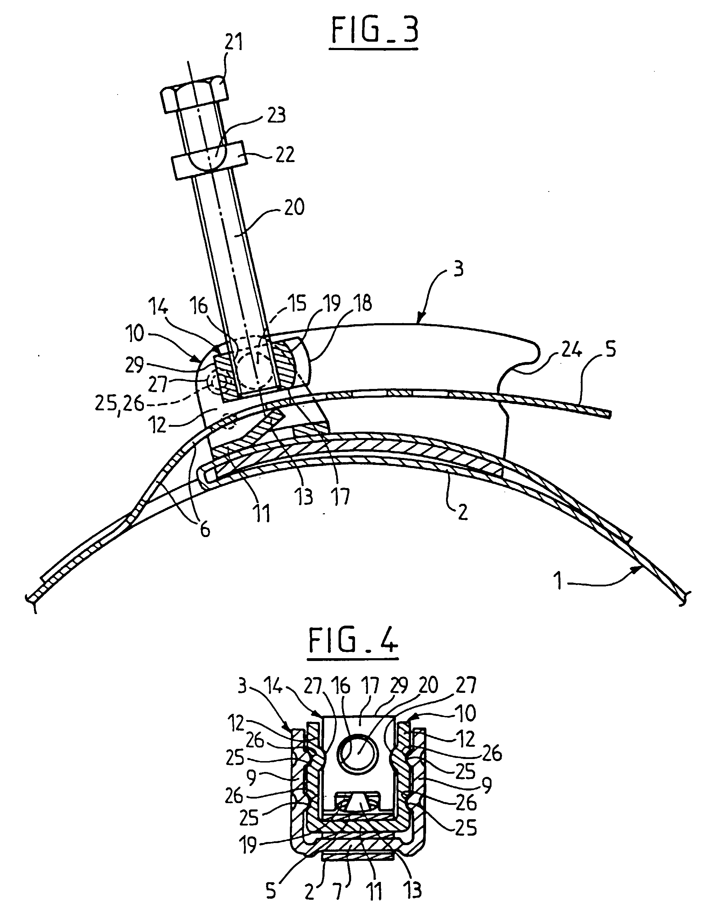

La cage 3 est constituée, comme le montre surtout la figure 4, par un tronçon de profilé en U, par exemple en tôle, dont l'âme 7 incurvée en arc de cercle est entourée par la partie d'extrémité 2 repliée de la bande métallique 1. L'âme 7 est prolongée, sur le côté opposé au point de soudure 4 de la partie d'extrémité 2 de la bande 1, par deux branches 8 en forme de dents de fourche, espacées d'une distance réciproque légèrement supérieure à la largeur de la bande métallique 1.

Les deux ailes 9 de la cage 3 en U sont tournées vers le côté extérieur du collier de serrage, c'est-à-dire à l'opposé de l'objet à serrer par le collier.

Pour assurer la liaison de la partie d'extrémité libre 5 de la bande métallique 1 avec la cage 3 solidaire de la partie d'extrémité 2 de la bande métallique 1, il est prévu un support 10 constitué par une pièce à profil en U d'une largeur extérieure légèrement inférieure à la largeur intérieure de la cage 3, de manière que le support 10 puisse être emboîté depuis le côté extérieur du collier de serrage dans la cage 3, son âme 11 étant tournée vers l'âme 7 de la cage 3 et ses deux ailes 12 étant tournées vers le côté extérieur du collier de serrage, tout comme les ailes 9 de la cage 3. Une dent 13 de forme triangulaire ou trapézoïdale est formée par découpage et pliage, à la manière d'une crevée, dans l'âme 11 du support 10, en étant inclinée vers le côté extérieur du collier de serrage et en direction du point de soudure 4 lorsque le support 10 est emboîté dans la cage 3.

Un écrou 14 est monté pivotant à l'intérieur du support 10. L'écrou 14 comporte deux tourillons 15 opposés montés en rotation dans des trous des deux ailes 12 du support 10 de manière que l'écrou 14 puisse pivoter par rapport au support 10 autour d'un axe qui est perpendiculaire au trou taraudé 16 de l'écrou 14.

L'écrou 14 présente une forme générale parallélépipédique, les deux tourillons 15 étant prévus sur deux côté étroits opposés de l'écrou 14.

Un côté large 17 de l'écrou 14 est espacé de l'axe de pivotement défini par les tourillons 15 de telle manière que lorsque l'écrou 14 occupe la position angulaire suivant la figure 3 dans laquelle le côté 17 est tourné vers l'âme 11 du support 10, il subsiste entre ledit côté 17 et l'extrémité libre de la dent 13 une distance supérieure à l'épaisseur du ruban métallique 1.

Un autre côté étroit 18 de l'écrou 14 qui est adjacent au côté 17 est incurvé en arc de cercle centré sur l'axe défini par les tourillons 15, avec un rayon qui, selon la figure 2, est supérieur à la distance séparant la pointe de la dent 13 de l'axe de pivotement de l'écrou 14, mais inférieur à la distance séparant l'âme 11 du support 10 de l'axe de pivotement de l'écrou 14. Le côté 18 de l'écrou 14 est par ailleurs échancré en 19, au milieu de sa largeur 18, également en arc de cercle centré sur l'axe de pivotement de l'écrou 14, de manière que la partie médiane 19 soit espacée de l'axe de pivotement de l'écrou 14 d'une distance qui, comme le montrent les figures 2 et 3, est supérieure à la distance séparant la face 17 de l'axe de pivotement de l'écrou 14, mais inférieure à la distance séparant la pointe de la dent 13 de l'axe de pivotement de l'écrou 14.

Dans l'écrou 14 est engagée une vis de serrage 20 portant sur sa tige, entre l'écrou 14 et sa tête 21, une butée 22 qui peut coulisser sur la tige de la vis 20 et présente deux oreilles 23 opposée destinées, lorsque la vis 20 se trouve en position de serrage, à coopérer avec deux échancrures 24 opposées ménagées dans les deux ailes 9 de la cage 3, sur le côté tourné vers le point de soudure 4 de la première partie d'extrémité 2 du ruban métallique 1.

Il convient par ailleurs de noter que la cage 3 présente, comme le montre surtout la figure 4, dans chacune de ses deux ailes 9 deux saillies intérieures 25 constituées par des emboutis locaux. Le support 10 présente de son côté, dans la face extérieure de chacune de ses deux ailes 12, deux creux 26 constitués également par deux emboutis locaux. Tel que cela apparaît sur la figure 4, l'embouti supérieur dans chaque aile 12 du support 10 forme intérieurement une saillie 27 destinée à coopérer, dans la position de l'écrou suivant la figure 3, avec un creux 28 ménagé dans l'écrou 14 dans le côté plat 29 opposé au côté 18, à l'endroit du raccordement du côté 29 avec chacun deux côtés opposés portant les tourillons 15 (voir figure 1).

La pose du collier de serrage s'effectue de la manière décrite ci-après.

Au départ, la bande métallique 1 étant ouverte, c'est-à-dire la partie d'extrémité libre 5 n'étant pas engagée dans la cage 3, le support 10 est emboîté dans la cage 3 et maintenu en position par coopération de ses creux 26 avec les bossages 25 de la cage 3. La vis 20 est engagée dans l'écrou 14 de manière que son extrémité ne dépasse pas l'écrou et est maintenue dans une position perpendiculaire à la base de la cage 3 par coopération des creux 28 de l'écrou 14 avec les bossages 27 du support 10. Dans cette position qui est illustrée par la figure 3, l'écrou 14 dégage la dent 13, sa face 17 étant suffisamment écartée de la dent 13 pour que la partie d'extrémité libre 5 de la bande métallique 1, munie de trous 6, puisse être enfilée dans l'espace compris entre l'écrou 14 et la base 11 du support 10.

On tire ensuite sur la partie d'extrémité libre 5 de la bande 1 jusqu'à appliquer la bande 1 contre l'objet à serrer (tube, tuyauterie, manchon, etc.) et on accroche à la dent 13 le trou 6 le plus proche de la dent 13.

On bascule alors la vis 20 dans le sens des aiguilles d'une montre sur la figure 3, ce qui fait pivoter l'écrou 14 autour des tourillons 15 jusqu'à ce que les oreilles 23 de la butée 22 appliquée contre la tête de vis 21 puissent se loger dans les échancrures 24 de la cage 3.

De ce fait, les deux parties latérales arquées du côté 18 de l'écrou 14 appuient la partie d'extrémité libre 5 de la bande 1 contre le fond 11 du support 10, de part et d'autre de la dent 13, pour empêcher la partie 5 de se dégager de la dent 13, et la partie médiane cylindrique 19 du côté 18 porte contre la pointe de la dent 13 pour empêcher cette dernière de se déformer sous l'effort de traction ultérieur de la bande 1.

On serre ensuite la vis 20 pour rapprocher l'écrou 14 et donc le support 10 de la tête de vis 21. Sous l'effort de traction de la vis 20, le support 10 se libère des saillies 25 de la cage 3 qui n'assurent qu'un positionnement provisoire.

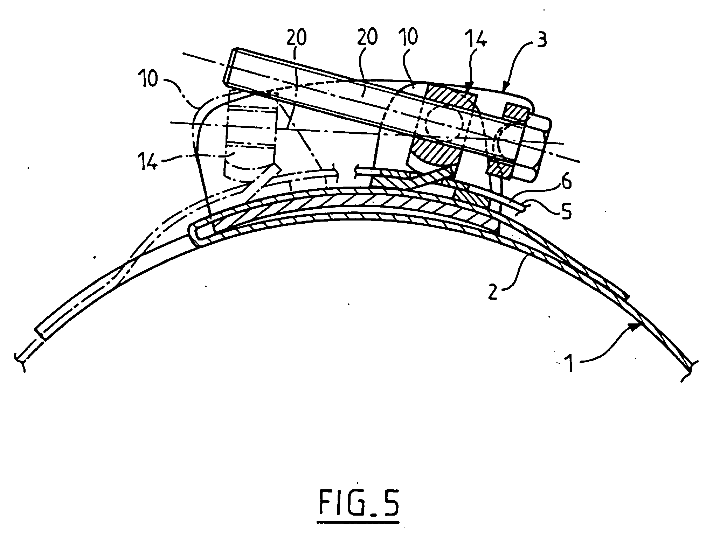

La course de serrage du collier, par serrage de la vis 20, est fonction de la longueur de cette dernière, comme cela apparaît sur la figure 5 qui montre en trait mixte la position du support 10, de l'écrou 14 et de la vis 20 au début du serrage et en trait plein la position de ces mêmes éléments en fin de serrage.

L'adaptation du collier de serrage conforme à l'invention à l'objet à serrer, par mise à longueur de la bande 1 sur la dent 13 du support 10, est pratiquement instantanée et l'amplitude de cette possibilité de mise à longueur peut être très grande puisqu'elle dépend du nombre de trous 6 de la bande métallique 1.

Le serrage par la vis de traction 20 permet un couple de serrage très important qui n'est limité que par la résistance à la traction de la vis 20.

Il va de soi que le mode de réalisation illustré et décrit n'a été donné qu'à titre d'exemple indicatif et non limitatif et que de nombreuses modifications et variantes sont possibles dans le cadre de l'invention.

Ainsi, les moyens de positionnement provisoire du support 10 sur la cage 3, constitués ici par des creux 26 et des saillies 25, pourraient être remplacés par d'autres moyens équivalents. Les surfaces arquées 18 et 19 de l'écrou 14 coopérant avec la partie d'extrémité libre 5 de la bande 1 et avec la dent 13, pourraient également être modifiées ou même supprimées en fonction notamment de la forme de la dent 13 qui pourrait être remplacée par tout autre ergot d'accrochage.

Au lieu d'utiliser une seule dent 13, il serait également possible de prévoir plusieurs dents disposées de préférence de manière à pouvoir coopérer avec plusieurs trous 6 successifs de la bande métallique 1.

## Revendications

1. Collier de serrage comprenant une bande métallique (1) formant une boucle ouverte destinée à entourer l'objet à serrer, une cage (3) reliée à une première partie d'extrémité (2) de ladite bande, un écrou (14) relié par un axe d'articulation (15) parallèle à l'axe de la boucle formée par la bande (1) à un support (10) susceptible de coopérer avec la seconde partie d'extrémité (5) de la bande, une vis de serrage (20) engagée dans ledit écrou et une butée (22) montée mobile sur la vis, entre la tête (21) de cette dernière et l'écrou (14), pour permettre l'appui de la tête (21) de la vis contre la cage (3) en vue du serrage de la bande, caractérisé par le fait que le support (10) sur lequel est articulé l'écrou (14) comporte au moins une dent (13) faisant saillie sur le support en direction de l'écrou (14), que la bande métallique (1) présente, au moins dans sa seconde partie d'extrémité (5), une rangée longitudinale de trous (6) de telle manière que ladite seconde partie d'extrémité (5) de la bande métallique (1) puisse être enfilée dans le support (10), entre la dent (13) de ce dernier et l'écrou (14), et que ladite dent (13) puisse s'accrocher dans un trou (6) de la bande (1), pour rendre ainsi le support (10) solidaire de la bande seconde partie d'extrémité (5) de la bande métallique (1) en vue du serrage du collier par la vis (20).

2. Collier de serrage suivant la revendication 1, caractérisé par le fait que l'écrou (14) comporte des moyens (19) pour empêcher la dent (13) du support (10) de se déformer sous l'effort de traction exercé sur la bande (1) lors du serrage.

3. Collier de serrage suivant la revendication 2, caractérisé par le fait que l'écrou (14) comporte au moins un côté plat (17) perpendiculaire à l'axe de la vis (20) et un côté adjacent (18) ayant une partie médiane cylindrique (19) qui est centrée sur l'axe d'articulation (15) de l'écrou (14) et présente un rayon de courbure supérieur à la distance séparant ledit côté plat (17) de l'axe d'articulation (15), de façon normale audit côté plat.

4. Collier de serrage suivant l'une quelconque des revendications précédentes, caractérisé par le fait que l'écrou (14 présente des moyens (18) empêchant la bande métallique (1) de se dégager de la dent (13) du support (10).

5. Collier de serrage suivant la revendication 4, caractérisé par le fait que l'écrou (14) présente, sur son côté (18) adjacent audit côté plat (17), de part et d'autre de ladite partie médiane cylindrique (19), deux parties latérales cylindriques ayant un rayon de courbure supérieur à celui de la partie médiane cylindrique.

6. Collier de serrage suivant l'une quelconque des revendications précédentes, caractérisé par le fait que la dent (13) du support (10) est inclinée en opposition au sens de la traction exercée sur la seconde partie d'extrémité (5) de la bande métallique (1) lors du serrage de la vis (20).

7. Collier de serrage suivant la revendication 6, caractérisé par le fait que la dent (13) présente une forme triangulaire ou trapézoïdale et que les trous (6) de la bande métallique (1) sont des trous circulaires.

8. Collier de serrage suivant l'une quelconque des revendications précédentes, caractérisé par le fait que la cage (3) et le support (10) comportent des moyens (25, 26, 27) de maintien provisoire du support (10) sur la cage (3), moyens dont l'action est automatiquement annulée lors du serrage de la vis (20).

9. Collier de serrage suivant l'une quelconque des revendications précédentes, caractérisé par le fait que le support (10) et l'écrou (14) comportent des moyens (27, 28) de maintien provisoire de l'écrou (14) dans la position d'enfilage de la deuxième partie d'extrémité (5) de la bande métallique (1) entre l'écrou (14) et le support (10).

10. Collier de serrage suivant la revendication 8 ou 9, caractérisé par le fait que les moyens de maintien provisoire comprennent des saillies (25, 27) sur l'une des pièces et des creux (26, 29) sur l'autre pièce, permettant un encliquetage par effet d'élasticité de l'une au moins des pièces.

## Patentansprüche

1. Spannschelle mit einem Metallband (1), das eine offene Schleife bildet, die dazu bestimmt ist, einen einzuspannenden Gegenstand zu umschließen, einem Gehäuse (3), das mit einem ersten Endabschnitt (2) des besagten Bandes verbunden ist, einer Mutter (14), die über eine Schwenkachse (15) parallel zur Achse der vom Band (1) gebildeten Schleife mit einem Halter (10) verbunden ist, der mit dem zweiten Endabschnitt (5) des Bandes zusammenarbeiten kann, einer Spannschraube (20), die mit der besagten Mutter in Eingriff steht, und einem Gegenlager (22), das beweglich auf der Schraube zwischen deren Kopf (21) und der Mutter (14) angebracht ist, damit der Kopf (21) der Schraube am Gehäuse (3) zum Spannen des Bandes zur Anlage kommen kann, dadurch gekennzeichnet, daß der Halter (10), an den die Mutter (14) angelenkt ist, wenigstens einen Zahn (13) aufweist, der am Halter in Richtung auf die Mutter (14) vorsteht, das Metallband (1) wenigstens in seinem zweiten Endabschnitt (5) eine längsverlaufende Reihe von Löchern (6) aufweist, derart, daß der besagte zweite Endabschnitt (5) des Metallbandes (1) in den Halter (10) zwischen den Zahn (13) des letzteren und die Schraube (14) eingefädelt werden kann, und daß der besagte Zahn (13) sich in ein Loch (6) des Bandes (1) einhaken kann, um in dieser Weise den Halter (10) fest mit dem zweiten Endabschnitt (5) des Metallbandes (1) zu verbinden, um die Schelle durch die Schraube (20) zu spannen.

2. Spannschelle nach Anspruch 1, dadurch gekennzeichnet, daß die Schraube (14) Einrichtungen (19) umfaßt, um den Zahn (13) des Halters (10) daran zu hindern, sich unter dem Einfluß des Zuges zu verformen, der beim Spannen auf das Band (1) ausgeübt wird.

3. Spannschelle nach Anspruch 2, dadurch gekennzeichnet, daß die Schraube (14) wenigstens eine ebene Seite (17) senkrecht zur Achse der Schraube (20) und eine benachbarte Seite (18) aufweist, die einen mittleren zylindrischen Teil (19) hat, der zur Schwenkachse (15) der Schraube (14) zentriert ist und einen Krümmungsradius hat, der größer als der Abstand ist, der die besagte ebene Seite (17) von der Schwenkachse (15) normal zur besagten ebenen Seite trennt.

4. Spannschelle nach einem der vorhergehenden Ansprüche, dadurch gekennzeichnet, daß die Schraube (14) Einrichtungen (18) aufweist, die verhindern, daß sich das Metallband (1) vom Zahn (13) des Halters (10) löst.

5. Spannschelle nach Anspruch 4, dadurch gekennzeichnet, daß die Schraube (14) an ihrer der ebenen Seite (17) benachbarten Seite (18) auf beiden Seiten des besagten mittleren zylindrischen Teils (19) zwei seitliche zylindrische Teile mit einem Krümmungsradius aufweist, der größer als der des mittleren zylindrischen Teils ist.

6. Spannschelle nach einem der vorhergehenden Ansprüche, dadurch gekennzeichnet, daß der Zahn (13) des Halters (10) in einer Richtung schräg verläuft, die dem Zug entgegengesetzt ist, der auf den zweiten Endabschnitt (5) des Metallbandes (1) beim Spannen der Schraube (20) ausgeübt wird.

7. Spannschelle nach Anspruch 6, dadurch gekennzeichnet, daß der Zahn (13) eine Dreiecks- oder Trapezform hat und daß die Löcher (16) des Metallbandes (1) kreisförmige Löcher sind.

8. Spannschelle nach einem der vorhergehenden Ansprüche, dadurch gekennzeichnet, daß das Gehäuse (3) und der Halter (10) Einrichtungen (25, 26, 27) zum vorläufigen Halten des Halters (10) am Gehäuse (3) aufweisen, deren Wirkung automatisch beim Spannen der Schraube (20) aufgehoben wird.

9. Spannschelle nach einem der vorhergehenden Ansprüche, dadurch gekennzeichnet, daß der Halter (10) und die Schraube (14) Einrichtungen (27, 28) zum vorläufigen Halten der Schraube (14) in der Position aufweisen, in der der zweite Endabschnitt (5) des Metallbandes (1) zwischen die Schraube (14) und den Halter (10) eingefädelt wird.

10. Spannschelle nach Anspruch 8 oder 9, dadurch gekennzeichnet, daß die Einrichtungen zum vorläufigen Halten Vorsprünge (25, 27) an einem der Bauteile und Vertiefungen (26, 29) am anderen Bauteil umfassen, die ein Einrasten über einen elastischen Effekt wenigstens eines der Bauteile erlauben.

## Claims

1. A clamping collar comprising a metal band (1) forming an opened loop intended to surround the object to be clamped, a housing (3) connected to a first end part (2) of said band, a nut (14) connected via an hinge pin (15) parallel to the axis of the loop formed by the band (1) to a holder (10) capable to cooperate with the second end part (5) of the band, a tightening screw (20) engaged in said nut and a stop unit (22) moveably assembled on the screw, between the head (21) of the latter and the nut (14), to permit a support of the screw head (21) on the housing (3) in order to clamp the band, characterized in that the holder (10) on which the nut (14) is articulated comprises at least a tooth (13) pointing from the holder in the direction of the nut (14), that the metal band (1) shows, at least in its second end part (5), a longitudinal row of holes (6) in such a way that said second end part (5) of the metal band (1) can be put on in the holder (10), between the tooth (13) of the latter and the nut (14), and that said tooth (13) can engage a hole (6) of the band (1), to make in this manner the holder (10) integral with the second end part (5) of the metal band (1) in order to clamp the collar with the screw (20).

2. The clamping collar in accordance with claim 1, characterized in that the nut (14) has means (19) to prevent a bending of the holder (10) tooth (13) by the pull stress exerted on the band (1) during clamping.

3. The clamping collar in accordance with claim 2, characterized in that the nut (14) has at least a flat side (17) perpendicular to the screw axis (20) and an adjacent side (18) having a cylindrical median part (19) aligned with the hinge pin (15) of the nut (14) and having a radius of curvature superior to the distance separating said flat side (17) from the hinge pin (15), normally to said flat side.

4. The clamping collar in accordance with any one of the preceding claims, characterized in that the nut (14) has means (18) to prevent the metal band (1) to release itself from the holder (10) tooth (13).

5. The clamping collar in accordance with claim 4, characterized in that the nut (14) shows, on its side (18) adjacent to said flat side (17), on both sides of said cylindrical median part (19), two cylindrical lateral parts having a radius of curvature superior to the radius of curvature of the cylindrical median part.

6. The clamping collar in accordance with any one of the preceding claims, characterized in that the holder (10) tooth (13) is inclinated in opposition to the direction of the pull stress exerted on the second end part (5) of the metal band (1) during screwing of the screw (20).

7. The clamping collar in accordance with claim 6, characterized in that the tooth (13) has a triangular or trapezoidal shape and that the holes (6) of the metal band (1) are circular holes.

8. The clamping collar in accordance with any one of the preceding claims, characterized in that the housing (3) and the holder (10) comprise means (25, 26, 27) for provisional maintaining of the holder (10) on the housing (3), the effect of the means being automatically cancelled during screwing of the screw (20).

9. The clamping collar in accordance with any one of the preceding claims, characterized in that the holder (10) and the nut (14) comprise means (27, 28) for provisional maintaining of the nut (14) in the position needed for putting on the second end part (5) of the metal band (1) between the nut (14) and the holder (10).

10. The clamping collar in accordance with claim 8 or 9, characterized in that the provisional maintaining means comprise protrusions (25, 27) on one of the parts and hollows (26, 29) on the other part, permitting a ratchet motion of at least one of the parts by way of an elastic effect.
